# EUROPÄISCHE PATENTSCHRIFT

(11) **EP 1 209 631 B1**
(45) Veröffentlichungstag und Bekanntmachung des Hinweises auf die Patenterteilung: **10.12.2008**
(21) Anmeldenummer: 01250371.0
(22) Anmeldetag: 22.10.2001
(51) Int. Cl.: G07B 17/00

(54) **Anordnung zur Stromversorgung für einen Sicherheitsbereich eines Gerätes**
Power supply arrangement for a security part of an apparatus
Dispositif d'alimentation électrique d'un secteur de securité d'un appareil

(30) Priorität: 28.11.2000 DE 20020635 U
(43) Veröffentlichungstag der Anmeldung: 29.05.2002
(73) Patentinhaber: Francotyp-Postalia GmbH, 16547 Birkenwerder (DE)
(72) Erfinder: Rosenau, Dirk, 13469 Berlin (DE); Schlaaff, Torsten, 16341 Zepernick (DE); Turner, Olaf, 12349 Berlin (DE)

(56) Entgegenhaltungen:
- EP-A- 0 328 062
- EP-A- 0 527 009
- EP-A- 1 022 683
- EP-A- 1 035 518
- WO-A-99/48055
- US-A- 4 628 457

## Beschreibung

Die Erfindung betrifft eine Anordnung zur Stromversorgung für einen Sicherheitsbereich eines Gerätes, gemäß der im Oberbegriff des Anspruchs 1 angegebenen Art. Ein solcher Sicherheitsbereich kann in Form eines postalischen Sicherheitsmoduls realisiert werden, welches insbesondere für den Einsatz in einer Frankiermaschine bzw. Postbearbeitungsmaschine oder Computer mit Postbearbeitungsfunktion geeignet ist.

Es sind vielfältige Sicherungsmaßnahmen zum Schutz gegen Ausfälle bzw. Störungen von intelligenten elektronischen Systemen bekannt.

Es ist bereits aus EP 417 447 B1 bekannt, in elektronischen Datenverarbeitungsanlagen besondere Module einzusetzen und mit Mitteln zum Schutz vor einem Einbruch in ihre Elektronik auszustatten. Solche Module werden nachfolgend Sicherheitsmodule genannt.

Moderne Frankiermaschinen, oder andere Einrichtungen zum Frankieren von Postgut, sind mit einem Drucker zum Drucken des Postwertstempels auf das Postgut, mit einer Steuerung zum Steuern des Druckens und der peripheren Komponenten der Frankiermaschine, mit einer Abrecheneinheit zum Abrechnen von Postgebühren, die in nichtflüchtigen Speichern gehalten werden, und einer Einheit zum kryptografischen Absichern der Postgebührendaten ausgestattet. Ein Sicherheitsmodul (EP 789 333 A2) kann eine Hardware-Abrecheneinheit und/oder die Einheit zum Absichern des Druckens der Postgebührendaten aufweisen. Beispielsweise kann ersterer als Anwenderschaltkreis ASIC und letzterer als OTP-Prozessor (One Time Programmable) realisiert werden. Ein interner OTP-Speicher speichert auslesesicher sensible Daten (kryptografische Schlüssel), die beispielsweise zum Nachladen eines Guthabens erforderlich sind. Eine Kapselung durch ein Sicherheitsgehäuse bietet einen weiteren Schutz. Zum Schutz eines Sicherheitsmoduls vor einem Angriff, auf die in ihm gespeicherten Daten, wurden weitere Maßnahmen vorgeschlagen, in der DE 198 16 572 A1, mit dem Titel: Anordnung für ein Sicherheitsmodul und DE 198 16 571 A1, mit dem Titel: Anordnung für den Zugriffsschutz für Sicherheitsmodule, im DE 199 12 780 A1, mit dem Titel: Anordnung für ein Sicherheitsmodul, im DE 199 12 781 A1, mit dem Titel: Verfahren zum Schutz eines Sicherheitsmoduls und Anordnung zur Durchführung des Verfahrens und im deutschen Gebrauchsmuster DE 299 05 219 U1, mit dem Titel: Sicherheitsmodul mit Statussignalisierung.

Das Sicherheitsmodul ist zum Beispiel auf die Hauptplatine des Meters der Frankiermaschine JetMail^{®} gesteckt. Das Metergehäuse ist vorzugsweise als Sicherheitsgehäuse ausgebildet ist, aber dennoch vorteilhaft so konstruiert, daß der Benutzer die Statusanzeige des Sicherheitsmoduls von außen durch eine Öffnung sehen kann. Das Anlegen der Systemspannung an den Modulprozessor des Sicherheitsmoduls ist ausreichend, die Anzeige zu aktivieren, um den Modulzustand ablesen zu können. Es kann unterschieden werden, ob das Sicherheitsmodul betriebsbereit oder defekt ist. Selbst wenn das Sicherheitsmodul funktioniert, kann signalisiert werden, wenn ein Service-Techniker zu rufen ist oder ein Restart des Systems durchgeführt wird. Ein Sicherheitsmodul kann in seinem Lebenszyklus verschiedene Zustände einnehmen, die aber nur im Betriebszustand des Meters angezeigt werden, d.h. wenn Systemspannung am Sicherheitsmodul anliegt. Anderenfalls würde die Batterie des Sicherheitsmoduls schnell erschöpft sein. Die Lebensdauer der Batterie soll dem Lebenszyklus angemessen und möglichst hoch sein. Bei ausgeschalteter Frankiermaschine, Stromunterbrechungen oder Systemspannungsausfall müssen Postregisterdaten, kryptografische Schlüssel und andere sensible Daten erhalten bleiben und auch die Echtzeituhr muß weiterlaufen. Hinzu kommen Schaltungselemente für permanente Überwachungsfunktionen, die ohne Unterbrechung weiterlaufen müssen. Hierdurch steigt der Bedarf an verfügbarem Batteriestrom mit der Folge, daß die Lebensdauer der Batterie sinkt.

Auf dem Sicherheitsmodul wurde deshalb gemäß DE 199 12 780 A1 eine auswechselbare Batterie angeordnet. Selbstverständlich kann letztere nur dann ausgewechselt werden, wenn Systemspannung anliegt. Eine Spannungsüberwachungseinheit mit rücksetzbarer Selbsthaltung detektiert einen Spannungsausfall oder ein Absinken der Spannung unter einen vorbestimmte Schwelle. Auch kurzfristige Ausfälle der Batteriespannung von Bruchteilen einer Sekunde führen zum sofortigen Blockieren des Sicherheitsmoduls und somit Unbrauchbarwerden der Frankiermaschine.

Bisher waren die Batterien direkt auf der Leiterplatte des Frankiermaschinenrechners bzw. des Sicherheitsmoduls untergebracht. Dies hat die Folge, dass der postalisch gesicherte Teil der Frankiermaschine zum Batteriewechsel geöffnet werden muß. Hierzu muß in vielen Ländern die Maschine bei der Post entsiegelt und nach erfolgtem Batteriewechsel wieder versiegelt werden. Das Sicherheitsmodul der Frankiermaschine Jetmail^{®} ist nur zugänglich, wenn das Metergehäuse zerstört wird. Der Vorgang ist auch für einen Service-Techniker nur unter Schwierigkeiten oder gar nicht beim Nutzer möglich. Das Meter muß zum Hersteller zurückgesandt werden und der Nutzer benötigt eine Ersatzmaschine miteinem anderem Sicherheitsmodul. Dies erzeugt einen erheblichen Aufwand, wenn beispielsweise in Zeitabständen von 5 Jahren ein Batteriewechsel durchgeführt wird. Für das Sicherheitsmodul sind bereits die 5 Jahre nur mit großen und teuren Lithium-Batterien realisierbar. Wünschenswert wäre eine Verlängerung der Lebensdauer auf vorzugsweise 12 Jahre.

Der Erfindung liegt die Aufgabe zugrunde, die Lebensdauer von batteriegestützt gespeicherten Daten in einem Sicherheitsbereich eines Gerätes zu erhöhen. Mit minimalen Aufwand soll eine Aufstockung der Batteriekapazität für einen Sicherheitsbereich eines Gerätes ermöglicht und dabei eine maximale Sicherheit vor einer Manipulation der gespeicherten Daten garantiert werden. Die Erfindung soll beispielsweise in Frankiermaschinen Anwendung finden, für die besondere Sicherheitsforderungen bezüglich der Postregisterdaten gelten, da insbesondere die geldwerten Abrechnungsdaten unmanipulierbar sein müssen.

Die Aufgabe wird mit den Merkmalen des Anspruchs 1 für eine Anordnung zur Stromversorgung für einen Sicherheitsbereich eines Gerätes gelöst.

Eine Lösung des Problems wurde in einer Anordnung eines Batteriefaches in einem Nichtsicherheitsbereich des Gerätegehäuses gefunden in Kombination mit einem Batterieumschalter und einem Überwachungsmittel. Die Lösung bietet einen Schutz gegen Falschpolung, Verzunderung der Batteriekontaktklemmen und Schutz gegen Nichteinsetzen einer zweiten Batterie bei der Durchführung eines Batteriewechsels. Die zweite Batterie verlängert durch Übernahme der Versorgung der Verbraucher die Lebensdauer der ersten Batterie. Dadurch daß ein Nutzer den Batteriewechsel selbst vornehmen kann, kann die Lebensdauer beispielsweise eines Sicherheitsmoduls auf ein Vielfaches erhöht werden, ohne das eine Rücksendung zum Herstellerwerk erforderlich wird. Dadurch, daß die Anordnung eines Batteriefaches nicht im Sicherheitsbereich des Gerätegehäuses erfolgt, kann die Sicherheit vor einer Manipulation der gespeicherten Daten garantiert werden. Der Batterieumschalter entkoppelt durch Dioden oder gesteuerte elektronische Schalter mindestens zwei Batterien oder Batteriesätze zur Versorgung des Sicherheitsmoduls. Das Überwachungsmittel besteht aus einem mit dem Batterieumschalter verbundenen Analog/Digital-Umsetzer und einem Modulprozessor zur Auswertung der anliegenden Batteriespannungen. Zur Signalisierung des Batteriezustandes kann eine vorhandene Anzeigeeinheit des Gerätes oder ein Signalisierungsmittel des Sicherheitsmoduls mitbenutzt werden. Der Batterieumschalter und das Überwachungsmittel sind vorzugsweise Bestandteile des Sicherheitsmoduls.

Vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
Figur 1, Anordnung zur Stromversorgung für einen Sicherheitsbereich,
Figur 2, Darstellung der Stromversorgung innerhalb eines postalischen Sicherheitsgerätes,
Figur 3, Perspektivische Ansicht einer ersten Frankiermaschine von vorn,
Figur 4, Blockschaltbild des Sicherheitsmoduls in einer Frankiermaschine,
Figur 5, Batteriereihenschaltung mit Spannungsverminderung,
Figur 6, Draufsicht des Sicherheitsmoduls,
Figur 7, Seitenansicht des Sicherheitsmoduls,
Figur 8, Perspektivische Ansicht einer zweitem Frankiermaschine von unten.

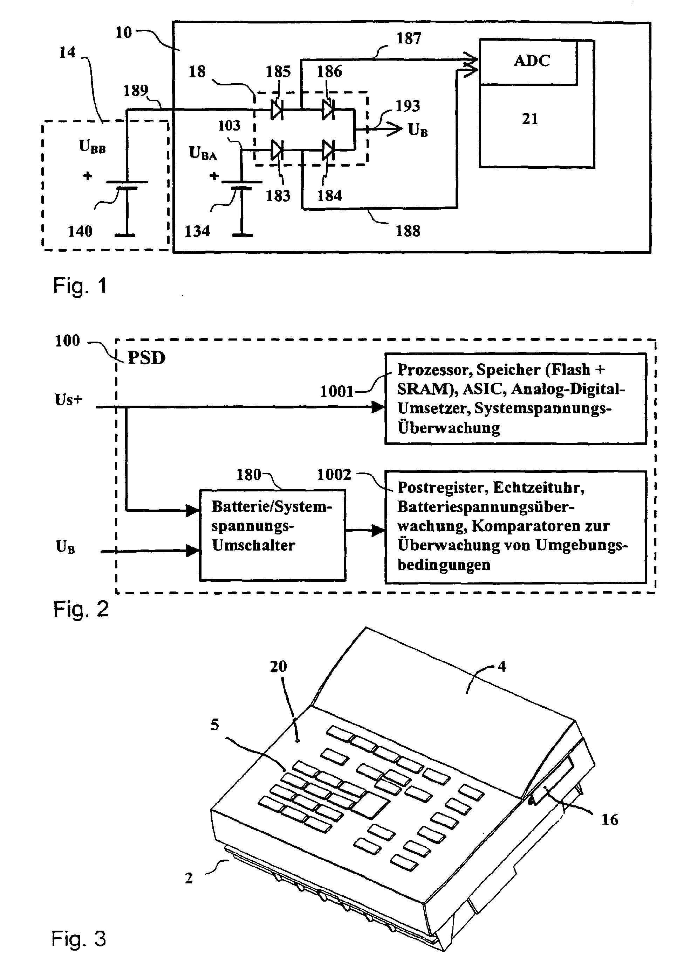

In der Figur 1 ist eine Anordnung zur Stromversorgung für einen Sicherheitsbereich eines Gerätes dargestellt. Ein Gerät, beispielsweise ein Postverarbeitungsgerät, eine Frankiermaschine oder ein Computer haben einen Sicherheitsbereich 10 und mindestens einen Nichtsicherheitsbereich 14. Während im Sicherheitsbereich 10 eine erste Batterie 134 eine Notstromversorgung von nicht dargestellten Komponenten bei Ausfall der Hauptstromversorgung garantiert, liefert eine zweite Batterie 140 eine Zusatzstromversorgung. Die erste Batterie 134 - beispielsweise eine 3V-Lithium-Batterie vom Typ CR ½ AA CD der Firma Varta - hat eine Nennspannung U_{BA}. Die zweite Batterie 140 ist im Nichtsicherheitsbereich 14 auswechselbar angeordnet und hat eine Nennspannung U_{BB}. Beide Batterieren sind über einen Batterieumschalter 18 voneinander entkoppelt und so zusammengeschaltet, daß an dessen Ausgang die jeweils höhere Batteriespannung anliegt, wobei gilt: U_{B} = U_{BB}, wenn U_{BA} < U_{BB} bzw. U_{B} = U_{BA}, wenn U_{BA} > U_{BB}. Die ausgangsseitige Spannung U_{B} dient zur Versorgung des Überwachungsmittels 21 und von weiteren Komponenten im Sicherheitsbereich. Die zweite Batterie 140 ist beispielsweise eine Lithium-Batterie vom Typ SL-360 der Firma Sonnenschein Lithium GmbH. Sie liegt mit ihrem Pluspol 141 über die Leitung 189 an einem der beiden Eingänge des Batterieumschalters 18 an. Die erste Batterie 134 liegt mit ihrem Pluspol 103 am anderen der beiden Eingänge des Batterieum-schalters 18 an. Die zweite Batterie 140 hat mit U_{BB} = 3,6 V also eine etwas höhere Spannung, als die erste Batterie 134 (U_{BA} = 3 V). Der Ausgang des Batterieumschalters 18 legt die Batteriespannung U_{B} = U_{BB} - U_{V} an Komponenten (nicht dargestellt) im Sicherheitsbereich an. Die Verlustspannung U_{V} fällt an den Dioden/Schaltern ab Die erste Batterie 134 befindet sich direkt in einem für den Nutzer nicht zugänglichen Sicherheitsbereich eines Gerätes, beispielsweise einer Frankiermaschine. Wenigstens ein Teil des Sicherheitsbereiches kann als Sicherheitsmodul ausgebildet sein. Im Unterschied zur auswechselbaren Batterie gemäß DE 199 12 780 A1 kann die erste Batterie 134 auf dem Sicherheitsmodul fest eingelötet werden. Sie dient als Notbatterie und kann relativ klein und billig sein. Die Speicherzeit bei ausschließlicher Versorgung durch diese Batterie kann in der Größenordnung von ca. ein Jahr betragen, jedoch muß die Lagerzeit dieser Batterie ≥ 10 Jahre sein. Diese Batterie kann schon während des laufenden Produktionsprozesses mit dem batteriespannungsbedürftigen Sicherheitsmodul/Bauelement verbunden werden, um die Speicherung von Informationen (Initialisierung) zu ermöglichen. In einer ersten Ausführungsform liegen zwischen dem ersten bzw. zweiten Eingang des Batterieumschalters 18 und dem Ausgang des Batterieumschalters 18 eine erste Reihenschaltung von Schottky-Dioden 183, 184 bzw. zweite Reihenschaltung von Schottky-Dioden 185, 186. Der Ausgang des Batterieumschalters 18 liegt auf einer Leitung 193. Der Verlustspannungsabfall über eine der Schottky-Dioden des Batterieumschalters 18 liegt typisch zwischen 100 und 200 mV. Vorteilhaft kann der Batterieumschalter 18 ein Bestandteil des Sicherheitsmoduls sein.

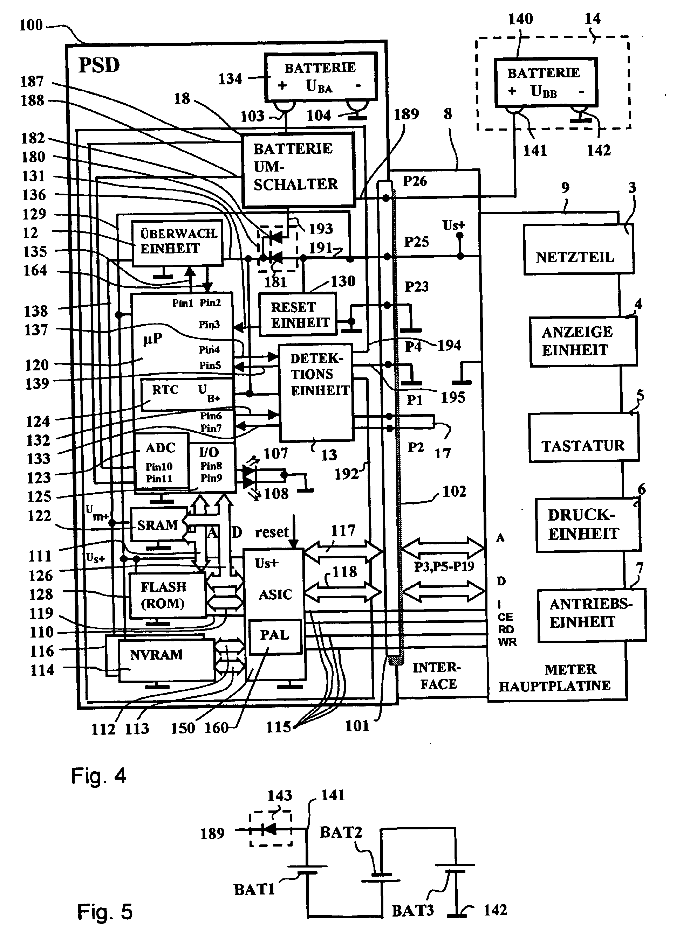

Die Mittelabgriffe 187, 188 der ersten und zweiten Reihenschaltung von Schottky-Dioden des Batterieumschalters 18 sind mit Eingängen eines Analog/Digital-Umsetzers eines Überwachungsmittels 21 verbunden. Letzteres kann ebenfalls ein Bestandteil des Sicherheitsmoduls sein. Der Sicherheitsmodul hat vorzugsweise einen Modulprozessor mit integrierten Analog/Digital-Umsetzer, was anhand der Fig.4 noch näher erläutert wird. Alternativ kann in - nicht dargestellter Weise - ein Digital/Analog-Umsetzer 121 an einen Eingang eines Komparators 127 einen Sollwert legen und der Komparator 127 vergleicht damit einen Istwert, der vom Mittelabgriff 187 an einen zweiten Eingang des Komparators 127 geliefert wird.

In einer zweiten Ausführungsform (nicht dargestellt) liegen zwischen dem ersten bzw. zweiten Eingang des Batterieumschalters 18 und dessen Ausgang eine Anzahl von Feldeffektschaltern oder wenigstens ein gesteuerter Schalter anderer Art, die von einer Logik gesteuert werden. Der Spannungsabfall über die Feldeffektschalter liegt zwischen 50 und 100 mV.

In einer dritten Ausführungsform (nicht dargestellt) liegen die Dioden 185, 183 bzw. gesteuerte Schalter im Minuspfad der Batterien.

Die Figur 2 zeigt eine Darstellung der Stromversorgung innerhalb eines eines postalischen Sicherheitsgerätes (Postal Security Device), unabhängig von der Ausführungsform des Batterieumschalters 18. Der Batterieumschalter 18, der selbst nicht mit dargestellt ist, liefert ausgangsseitig eine Batteriespannung U_{B} von ca. 2,6 bis 3,2 V. Eine vom - in Fig.4 gezeigten - Netzteil des Gerätes gelieferte Systemspannung U_{S}+ von ca. 3,3 V liegt einerseits an den Bauelementen eines ersten Versorgungsbereiches 1001 und andererseits an einem ersten Eingang eines Batterie/Systemspannungsumschalter 180 an. An dessen zweiten Eingang liegt die vorgenannte Batteriespannung U_{B} an. Am Ausgang des Batterie/Systemspannungsumschalters 180 wird eine Spannung geliefert, die an den Bauelementen eines zweiten Versorgungsbereiches 1002 zur Versorgung der Postregister, der Echtzeituhr, zur Batteriespannungsüberwachung und zur Überwachung von Umgebungsbedingungen (beispielsweise Temperatur) anliegt. Die Bauelemente des ersten Versorgungsbereiches 1001 sind der Prozessor des postalischen Sicherheitsmoduls PSD, Speicher (Flash und SRAM), eine Anwendungsspezifische Schaltung ASIC, ein Analog/Digital-Umsetzer(ADU) und eine Systemspannungsüberwachungseinheit. Es ist zweckmäßig, eine elektronische Batteriespannungsüberwachung vorzusehen. Diese kann entweder auf der Sammelleitung 193, d.h. zwischen den Schaltern und dem Verbraucher oder aber für jede Battrie getrennt zwischen Batterie und Schaltern oder - wie in Fig.1 gezeigt - vorzugsweise am Abgriff zwischen den Schaltern eine Batteriespannung abgreifen. Die Spannungsüberwachungsschaltung muß nur aktiviert werden, wenn die Maschine in Betrieb ist. Es ist vorgesehen, den Nutzer auf eine erforderlichen Wechsel der zweiten Batterie 140 aufmerksam zu machen. Hierduch können die Wechselintervalle an die wirkliche Kapazität der zweiten Batterien angepaßt werden und die zweiten Batterien werden besser ausgenutzt. Dies kann zweckmäßig durch eine Anzeigeeinheit des Gerätes oder Signalisierungsmittel erfolgen. Durch eine Änderung der Betriebes des Gerätes wird der Nutzer zum Batterietausch letztlich doch veranlaßt. Bei einem Ignorieren der Anzeige/Signalisierung kann die Frankiermaschine ggf. nach einer Karenzzeit ein besonderes Verhalten aufweisen. Beispielsweise ist der Prozessor des PSD programmiert, das Gerät nach einer Karenzzeit zu blockieren, wenn das erforderliche Wechseln mindestens der zweiten Batterie 140 ausbleibt.

In der Figur 3 ist eine perspektivische Ansicht der Frankiermaschine von vorn dargestellt. Die Frankiermaschine JetMail^{®} besteht aus einem Meter und einer - nicht dargestellten - Base. Das Meter 2 hat auf der Oberseite ein Userinterface mit einer Anzeigeeinheit 4 und einer Tastatur 5, ggf. mit einer Signalöffnung 20, zur Signalisierung der Zustände des Sicherheitsmoduls. Das Sicherheitsmodul wird auf die Hauptplatine des Meters der Frankiermaschine oder eines anderen geeigneten Gerätes gesteckt, das vorzugsweise als Sicherheitsgehäuse ausgebildet ist. Das Metergehäuse ist dabei vorteilhaft so konstruiert, daß der Benutzer die Statusanzeige des Sicherheitsmoduls trotzdem von außen durch eine Öffnung 20 sehen kann, wobei sich die Öffnung 20 zur Bedienoberfläche des Meters 2 erstreckt. Die Anzeige/Signalisierung wird direkt vom sicherheitsmodulinternen Mikroprozessor (Modulprozessor) gesteuert und ist so von außen nicht ohne weiteres manipulierbar. Die Anzeige ist im Betriebszustand der Frankiermaschine ständig aktiv, so daß das Anlegen der Systemspannung Us+ an den Modulprozessor des Sicherheitsmoduls ausreicht, die Anzeige zu aktivieren, um den Modulzustand ablesen zu können. Ein in der Tiefe des Meters 2 unter der Tastatur 5 liegender von außen nicht zugänglicher - nicht dargestellter - Sicherheitsbereich mit dem vorgenannten Sicherheitsmodul PSD ist durch eine Blechschirmung abgetrennt von einem Nichtsicherheitsbereich. In letzterem ist ein Batteriefach vorgesehen, welches mit einer Batterieklappe 16 verschließbar ist, die an einer Seitenwand des Meters 2 poststromabwärts angeordnet ist.
Die zweite Batterie 140 kann vom Techniker und/oder Nutzer ausgetauscht werden, ohne den postalisch besonders gesicherten Teil der Frankiermaschine zu öffnen. Sie muß daher nicht auf die volle Lebensdauer der Maschine bemessen sein, ohne dass die oben genannten Probleme mit dem Batteriewechsel auftreten. Die zweite Batterie 140 ist also an einer für Techniker und/oder Nutzer leicht erreichbaren Stelle angebracht, vorzugsweise in dem von außen zugänglichen Batteriefach. Bei Systemspannungausfall wird - gesteuert durch die elektronischen Schalter bzw. bei Dioden durch die Spannungshöhe - die Last allein durch die zweite Batterie 140 versorgt. Die erste Batterie 134 ist dann eine reine Reserve für den Moment des Wechselns der zweiten Batterie 140 beziehungsweise für den Fall, daß letztere leer ist. Daher erreicht die erste Batterie 134 in dieser Anordnung annähernd ihre maximale Lebensdauer und muß im gewünschten Zeitbereich von ca. 12 Jahren nicht gewechselt werden.

Die Figur 4 zeigt ein Blockschaltbild des postalischen Sicherheitsmoduls PSD 100, welches in einer bevorzugten Variante mit einer Frankiermaschine verschaltet ist. Ein Netzteil 3, einen Anzeigeeinheit 4, eine Tastatur 5, eine Druckeinheit 6 und eine Antriebseinheit 7 sind mit der Meter-Hauptplatine 9 des Meters 2 bzw. einer Frankiermaschine 1 verbunden. Das Netzteil 3, die Anzeigeeinheit 4, die Tastatur 5 und die Antriebseinheit 7 können außerhalb eines Sicherheitsbereiches angeordnet sein. Es gibt mindestens einen Nichtsicherheitsbereich 14 für eine zweite Batterie 140. Das postalische Sicherheitsmodul PSD 100 steht über einen Systembus 115, 117, 118, über eine Kontaktgruppe 101 und über ein Interface 8 mit der Meter-Hauptplatine 9 des Meters 2 bzw. der Frankiermaschine in Kommunikationsverbindung und wird entweder vom Netzteil 3 mit einer Systemspannung oder von der zweiten Batterie mit Batteriespannung versorgt. Der Modulprozessor 120 kann über den Systembus und beispielsweise ein - nicht gezeigtes - Modem in Kommunikationsverbindung mit einer entfernten Datenzentrale (nicht gezeigt) eintreten. Um ein Guthaben zu laden und die postalischen Abrechnungsdaten in nichtflüchtigen Speichern unterschiedlicher Technologie zu speichern, sind ein erster und zweiter nichtflüchtiger Speicher im postalischem Sicherheitsmodul PSD 100 entsprechend ausgebildet. Die Abrechnung wird vom anwenderspezifischen Schaltkreis ASIC 150 des postalischen Sicherheitsmoduls PSD 100 vollzogen. Der ASIC 150 enthält mindestens eine Hardware-Abrecheneinheit für die Berechnung der zu speichernden postalischen Daten. Der ASIC 150 wird durch eine Programmable Array Logic (PAL) 160 gesteuert. In der Logik PAL 160 ist eine Zugriffslogik für den ASIC 150 untergebracht.. Ein Adreß- und Steuerbus 117, 115 von der Hauptplatine des Meters 1 ist an entsprechenden Pins der Logik PAL 160 angeschlossen und die PAL 160 erzeugt mindestens ein Steuersignal für das ASIC 150 und ein Steuersignal 119 für den Programmspeicher FLASH 128. Der Modulprozessor 120 arbeitet ein Programm ab, das im FLASH 128 gespeichert ist. Der Modulprozessor 120 und die anderen Baugruppen, wie FLASH 128, ASIC 150 und PAL 160 sind über einen modulinternen Systembus miteinander verbunden, der Leitungen 110,111,126,119 für Daten-, Adreß- und Steuersignale enthält. Als Modulprozessor 120 eignet sich besonders ein KS32C41000 RISK MICROPROCESSOR der Firma Samsung. Letzterer weist intern eine Verarbeitungseinheit CPU 121, eine Echtzeituhr RTC 122, einen A/D-Umsetzer ADC 123 und eine Ein/Ausgabe-Einheit 125 auf. Der Modulprozessor 120 des Sicherheitsmoduls 100 ist über einen modulinternen Datenbus 126 mit einem FLASH 128 und mit dem ASIC 150 verbunden. Der FLASH 128 dient als Programmspeicher und wird mit Systemspannung Us+ versorgt. Er ist beispielsweise ein 128 Kbyte-FLASH-Speicher vom Typ AM29F010-45EC. Der Modulprozessor 120 des Sicherheitsmoduls 100 liefert über einen internen Adreßbus 111 die Adressen 0 bis 15 an die entsprechenden Adresseingänge des FLASH 128 und eines statischen Arbeitsspeichers SRAMs 122. Der ASIC 150 des Sicherheitsmoduls 100 steht über die Kontaktgruppe 101 des Interfaces mit dem Datenbus 118, mit dem Adreßbus 117 und dem Steuerbus 115 der Hauptplatine des Meters 2 in Kommunikationsverbindung.

Die RESET-Einheit 130 ist über die Leitung 131 mit dem Pin 3 des Modulprozessors 120 und mit einem Pin des ASIC's 150 verbunden. Der Modulprozessor 120 und das ASIC 150 werden bei Absinken der Systemspannung durch eine Resetgenerierung in der RESET-Einheit 130 zurückgesetzt. In den Ruhezeiten außerhalb des Normalbetriebes speisen die erste Batterie 134 oder zweite Batterie 140 die Echtzeituhr 122 mit den Datums-/Uhrzeitregistern und den statischen Arbeitsspeicher SRAM 124, welcher sicherheitsrelevante Daten enthält. Der negative Pol der ersten Batterie 134 ist auf Masse und einen Pin P23 der Kontaktgruppe 101 gelegt. Der positive Pol der ersten Batterie 134 ist mit dem ersten Eingang des Batterieumschalters 18 und ausgangsseitig über die Leitung 193 mit dem einen Eingang des Spannungsumschalters 180 und Pin P25 der Kontaktgruppe 101, der die Systemspannung führt ist über eine Leitung 191 mit dem anderen Eingang des Spannungsumschalters 180 verbunden. Der positive Pol der zweiten Batterie 140 liegt am Pin P26 der Kontaktgruppe 101 und ist mit dem zweiten Eingang des Batterieum-schalters 18 verbunden. Wenn die zweite Batterie 140 auf eine höhere Nennspannung ausgelegt ist als die erste Batterie 134, dann reichen Schottky-Dioden zur Entkopplung aus, andernfalls müssen im Batterieumschalter 18 gesteuerte Schalter eingesetzt werden. Als Batterieumschalter 18 eignet sich der Schaltkreis vom Typ DS 1314 von der Firma Dallas Semiconductor. Die erste Batterie 134 ist beispielsweise eine Lithium-Batterie vom Typ CR ½ AA CD der Firma Varta. Deren Nennkapazität wird mit 950 mAh angegeben. Die Lebensdauer ist bei optimalen Betriebs- und Lagerbedingungen nur durch die Speicherzeit und Lagerzeit dieser Batterie begrenzt. Natürlich eignet sich als erste Batterie 134 auch jede andere 3V- Lithium-Batterie höherer Kapazität, wie zum Beispiel der Typ SL-389/P gemäß DE 199 12 780 A1. Die zweite Batterie 140 ist beispielsweise eine Lithium-Batterie vom Typ SL-360 der Firma Sonnenschein Lithium GmbH. An die Speicherzeit und Lagerzeit der zweiten Batterie werden keine hohen Anforderungen gestellt. Wichtig ist nur eine ausreichend hohe Kapazität zur Versorgung der Last bei abgeschalteter Systemspannung. Als Spannungsumschalter 180 kann ein handelsüblicher Schaltkreis vom Typ ADM 8693ARN eingesetzt werden.

Der Ausgang des Spannungsumschalters 180 liegt über die Leitung 136 an einer Spannungsüberwachungseinheit 12, an einer Detektionseinheit 13 und an einer Echtzeituhr 124 des Mikroprozessors an. Die Spannungsüberwachungseinheit 12 und die Detektionseinheit 13 stehen mit den Pins 1, 2 und Pins 4, 5 des Mikroprozessors 120 über die Leitungen 135, 164 und 137, 139 in Kommunikationsverbindung. Der P25 der Kontaktgruppe 101, der die Systemspannung führt, ist über eine Leitung 129 mit dem Versorgungseingang eines ersten Speichers 114 verbunden. Letzterer ist zum Beispiel ein statischer Arbeitsspeicher, der durch die vorhandene Systemspannung zum nichtflüchtigen Speicher NVRAM 114 einer ersten Technologie wird.
Am Versorgungseingang eines als Arbeitsspeicher dienenden statischen Arbeitsspeichers SRAM 122 und eines zweiten nichtflüchtigen Speichers NVRAM 116 liegt eine Spannung Um+ an, die vom Ausgang der Überwachungseinheit 12 auf der Leitung 138 geliefert wird. Bei ausgeschalteter Systemspannung liegt eine der beiden Batteriespannungen an. Sinkt die Spannung der Batterie während des Batteriebetriebs unter eine bestimmte Grenze, so wird von der Schaltung der Überwachungseinheit 12 der Speisepunkt für das SRAM mit Masse verbunden. Das heißt, die Spannung am SRAM liegt dann bei 0V. Das führt dazu, daß der SRAM 122, der z.B. wichtige kryptografische Schlüssel enthält, sehr schnell gelöscht wird. Gleichzeitig fällt auch die Versorgungspannung des zweiten nichtflüchtigen Speichers NVRAM 116 auf Null, jedoch gehen keine Daten verloren. Der zweite nichtflüchtige Speicher NVRAM basiert auf einer zweiten Technologie (SHADOW-RAM). Diese zweiten Technologie umfaßt vorzugsweise ein RAM und ein EEPROM, wobei letzteres die Dateninhalte bei Systemspannungsausfall automatisch übernimmt. Der NVRAM 116 der zweiten Technologie ist mit den entsprechenden Adress-und Dateneingängen des anwenderspezifischen Schaltkreises ASIC 150 über einen internen Adreß- und Datenbus 112, 113 verbunden.

Die Schaltung der Spannungsüberwachungseinheit 12 ist beispielsweise so dimensioniert, daß jegliches Absinken der Batteriespannung auf der Leitung 136 unter die spezifizierte Schwelle von 2,6 V zum Ansprechen der Schaltung 12 führt. Gleichzeitig mit der Indikation der Unterspannung der Batterie wechselt die Schaltung 12 in einen Selbsthaltezustand, in dem sie auch bei nachträglicher Erhöhung der Spannung bleibt. Sie liefert außerdem ein Statussignal 164. Beim nächsten Einschalten des Moduls kann der Modulprozessor 120 den Zustand der Schaltung (Statussignal) abfragen und damit und/oder über die Auswertung der Inhalte des gelöschten Speichers darauf schließen, daß die Batteriespannung zwischenzeitlich einen bestimmten Wert unterschritten hat. Der Modulprozessor 120 kann die Überwachungsschaltung 12 zurücksetzen, d.h. "scharf" machen. Letztere reagiert auf ein Steuersignal auf der Leitung 135.

Die Leitung 136 am Eingang der Spannungsüberwachungseinheit 12 versorgt zugleich eine Detektions-Einheit 13 mit Betriebs- oder Batteriespannung. Die Detektions-Einheit 13 ist mit einer Leiterschleife 192, 194 verbunden, welche im Gehäuse des Sicherheitsmoduls eingearbeitet und mit Vergußmasse (zum Beispiel Kunstharz) vergegossen ist. Ein Angriff auf das Gehäuse (zum Beispiel Bohren) kann damit detektiert werden.
Vom Prozessor 120 wird der Zustand der Detektions-Einheit 13 über die Leitung 139 abgefragt oder die Detektions-Einheit 13 wird vom Modulprozessor 120 über die Leitung 137 ausgelöst bzw. gesetzt. Nach dem Setzen wird eine statische Prüfung auf Anschluß durchgeführt. Dazu wird über eine Leitung 195 Massepotential abgefragt, welches am Anschluß P4 des Interfaces 8 des postalischen Sicherheitsmoduls PSD 100 anliegt und nur abfragbar ist, wenn der Sicherheitsmodul 100 ordnungsgemäß gesteckt ist. Bei gesteckten Sicherheitsmodul 100 wird Massepotential des negativen Pols 104 der Batterie 134 des postalischen Sicherheitsmoduls PSD 100 auf den Anschluß P23 des Interfaces 8 gelegt und ist somit am Anschluß P4 des Interfaces über die Leitung 192 von der Detektions-Einheit 13 abfragbar.
An den Pins 6 und 7 des Modulprozessors 120 sind über die Detektions-einheit 13 Leitungen angeschlossen, welche nur bei einem, beispielsweise an die Hauptplatine des Meters 1, gesteckten Sicherheitsmodul 100 eine Leiterschleife 17 bilden. Zur dynamischen Prüfung des Angeschlossenseins des postalischen Sicherheitsmoduls PSD 100 an der Hauptplatine des Meters 1 werden vom Modulprozessor 120 wechselnde Signalpegel in ganz unregelmäßigen Zeitabständen an die Pin's 6, 7 angelegt und über die Schleife zurückgeschleift.
Der Modulprozessor 120 ist mit der Ein/Ausgabe-Einheit 125 ausgestattet, deren Anschlüsse Pin's 8, 9 zur Ausgabe mindestens eines Signals zur Signalisierung des Zustandes des Sicherheitsmoduls 100 dienen. An den Pin's 8 und 9 liegen I/O-Ports der Ein/Ausgabe-Einheit 125, an welchen modulinterne Signalmittel angeschlossen sind, beispielsweise farbige Lichtemitterdioden LED's 107, 108. Diese signalisieren den Modulzustand bei einem auf die Hauptplatine des Meters 1 gesteckten Sicherheitsmoduls 100 durch eine Öffnung 109 im Metergehäuse. Die Sicherheitsmodule können in ihrem Lebenszyklus verschiedene Zustände einnehmen. So muß zum Beispiel der batteriezustand detektiert werden und weiterhin, ob das Sicherheitsmodul gültige kryptografische Schlüssel enthält. Auch ist es auch wichtig zu unterscheiden, ob das Sicherheitsmodul funktioniert oder defekt ist. Die genaue Art und Anzahl der Modulzustände ist von den realisierten Funktionen im Sicherheitsmodul und von der Implementierung abhängig. Der Mikroprozessor ist zur Auswertung der anliegenden Batteriespannungen über den Analog/Digital-Umsetzer 123 mit dem Batterieumschalter 18 verbunden. Der Analog/Digital-Umsetzer 123 liefert dem Mikroprozessor einen digitalisierten Meßwert zur Auswertung der anliegenden Batteriespannungen und der dem Mikroprozessor ist entweder direkt mit einem Signalisierungsmittel 107, 108 der Zustände des Sicherheitsmoduls oder indirekt mit einem Signalisierungsmittel des Meters (Beeper, Anzeigeeinheit) verbunden.

Der Spannungsumschalter 180 gibt als Ausgangsspannung auf der Leitung 136 diejenige seiner Eingangsspannungen weiter, die größer als die andere ist. Wenn der Batterieumschalter mit Schottky-Dioden und der Spannungsumschalter 180 einfach aus Dioden 181, 182 aufgebaut und die Systemspannung am größten ist, kann gegebenenfalls die Diode 182 des Spannungsumschalters 180 entfallen. Durch die Möglichkeit, die o.g. Schaltung in Abhängigkeit von der Höhe der Spannungen U_{S}+ und U_{BA}+ und U_{BB}+ automatisch mit der größeren von allen dreien zu speisen, kann jederzeit die Batterie 140 ohne Datenverlust gewechselt werden.

Die zweite Batterie 140 kann aus einer Reihenschaltung billiger Allgebrauchsbatterien BAT1, BAT2, BAT3 bestehen, beispielsweise normale Mignonzellen oder Microzellen jeweils mit einer Nennspannung von je 1,5 V aufweisen. Die sich ergebende Gesamtspannung von 4,5V ist etwas zu hoch. Die Figur 5 zeigt deshalb eine Batteriereihenschaltung mit Spannungsverminderungseinheit 143. Letztere kann beispielsweise eine Diode (Zenerdiode oder Siliziumdiode) oder ein Regler sein.

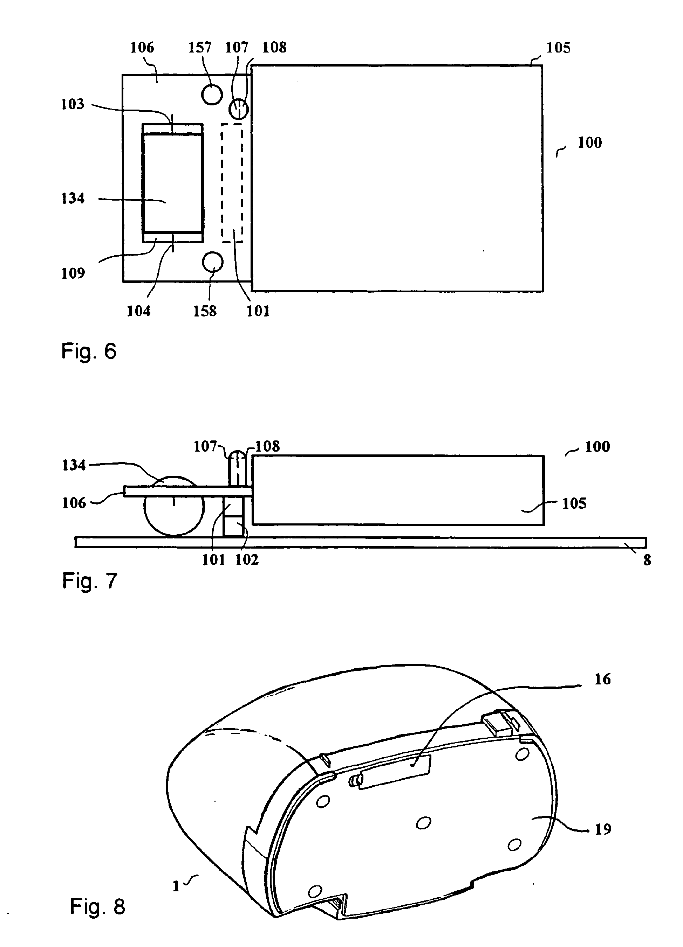

Die Figur 6 zeigt zeigt den mechanischen Aufbau des Sicherheitsmoduls in Draufsicht. Das Sicherheitsmodul ist als Multi-Chip-Modul ausgebildet, d.h. mehrere Funktionseinheiten sind in einem ersten Teil einer Leiterplatte 106 verschaltet. Die Vergußmasse 105 umgibt quaderförmig den ersten Teil der Leiterplatte 106, während ein zweiter Teil der Leiterplatte 106 für die erste Batterie 134 von Vergußmasse frei bleibt. Die Leiterplatte 106 hat eine Öffnung 109 für die erste Batterie 134 und Lötstellen oder Batteriekontaktklemmen 103 und 104 für den Anschluß der Pole der Batterie 134, vorzugsweise unterhalb der Leiterplatte 106. Zum Anstecken des postalischen Sicherheitsmoduls PSD 100 auf die Hauptplatine des Meters 2 ist die Kontaktgruppe 101 (gestrichelt gezeichnet) unterhalb der Leiterplatte 106 (Leiterbahnseite) des Sicherheitsmoduls 100 angeordnet.

In der Figur 7 ist eine Seitenansicht des postalische Sicherheitsmoduls dargestellt. Wird das Sicherheitsmodul über Interface 8 auf die Hauptplatine gesteckt, dann kann es innerhalb des Metergehäuses dergestalt angeordnet sein, so daß das Signalmittel 107, 108 nahe einer Öffnung 20 (Fig.3) ist oder in diese hineinragt. Das Metergehäuse ist damit vorteilhaft so konstruiert, daß der Benutzer die Statusanzeige des Sicherheitsmoduls trotzdem von außen sehen kann (Fig.3). Beide Leuchtdioden sind in einem gemeinsamen Bauelementegehäuse untergebracht (Bicolorleuchtdiode), weshalb die Abmaße bzw. der Durchmesser der Öffnung relativ klein bleiben kann und in der Größenordnung des Signalmittels liegt. Prinzipiell sind drei unterschiedliche Farben darstellbar (rot, grün, orange), jenachdem die Leuchtdioden LED's einzeln oder gleichzeitig angesteuert werden. Zur Zustandsunterscheidung werden die Leuchtdioden LED's auch einzeln oder zusammen blinkend ggf. abwechseln blinkend gesteuert, so daß neun verschiedene Zustande unterschieden werden können, in welchem mindestens eine der beiden Leuchtdioden LED's aktiviert wird. Der Modulprozessor nimmt eine Überwachung und Signalisierung des Modulzustandes vor und wird wird nur bei Versorgung des Sicherheitsmoduls mit Systemspannung aktiviert, um eine Batterie zu schonen. Der Modulprozessor überwacht die hardwaremäßige Abrecheneinheit, Speicher und Baugruppen sowie die erste Batterie 134 im Sicherheitsbereich und zweite Batterie 140 im Nichtsicherheitsbereich. Dabei steht die sichere Erkennung von Fehlfunktionen oder Ausfällen bzw. Erschöpfung sowie eine geeignete Reaktion darauf im Vordergrund.
Die beiden Leuchtdioden 107 und 108 des Signalmittels können alternativ an einer Stelle angeordnetwerden, so daß letztere nur von einem Service-Techniker beobachtet werden können oder die zwei Ausgangssignale der I/O-Ports an den Pin 8, 9 des Modulprozessors 120 werden über den Prozessor der Hauptplatine zur Anzeigeeinheit 5 übermittelt.

Die Figur 8 zeigt eine perspektivische Ansicht einer weiteren Frankiermaschine 1 von unten, in welcher das anhand der Figuren 4, 6 und 7 näher erläuterte Sicherheitmodul zum Einsatz kommt. Die Frankiermaschine 1 hat ein Bodenteil 19 mit einem herausnehmbaren Batteriefachdeckel 16, welcher ein (nicht sichtbares) Batteriefach verschließt, das im Nichtsicherheitsbereich angeordnet ist. Das Batteriefach ist für die zweite Batterie 140 vorgesehen. Das Userinterface (verdeckt) hat eine Anzeigeeinheit zur Signalisierung des Modulzustandes und des Erfordernisses zum Wechseln der zweiten Batterie, wenn deren Energie zur Speisung des Sicherheitmoduls, vom Modulprozessor als nicht mehr ausreichend bewertet wird.

Statt einer herausnehmbaren 3,6V-Li-Batterie, kann auch ein Akkumulator oder ein Satz an 1,5V Batterien oder Akkumulatoren in Reihenschaltung verwendet werden. Die Batterien oder Akkumulatoren können auch wiederaufladbar sein.

Natürlich kann neben einer Elektronik im Sicherheitsbereich auch eine Elektronik im Nichtsicherheitsbereich durch die zweite Batterie zusätzlich mit versorgt werden. Auch können außerhalb des Sicherheitsmoduls liegende Komponenten, wie batteriegestützte nichtflüchtige Speicher (Bat-CMOS-RAM) oder ein zweiter Uhrenbaustein mitversorgt werden.

Erfindungsgemäß ist das Sicherheitsmodul zum Einsatz in postalischen Geräten bestimmt, insbesondere zum Einsatz in einer Frankiermaschine. Jedoch kann das Sicherheitsmodul auch eine andere Bauform aufweisen, die es ermöglicht, daß es beispielsweise auf die Hauptplatine eines Personalcomputers gesteckt werden kann, der als PC-Frankierer einen handelsüblichen Drucker ansteuert.

Die Erfindung ist nicht auf die vorliegenden Ausführungsform beschränkt, da offensichtlich weitere andere Anordnungen bzw. Ausführungen der Erfindung entwickelt bzw. eingesetzt werden können, die - vom gleichen Grundgedanken der Erfindung ausgehend - von den anliegenden Patentansprüchen umfaßt werden.

## Patentansprüche

1. Anordnung zur Stromversorgung für einen Sicherheitsbereich eines Gerätes mit einer ersten Batterie (134) an einem ersten Eingang eines Batterieumschalters (18) im Sicherheitsbereich (10), **dadurch gekennzeichnet, daß** eine zweite Batterie (140) in einem Nichtsicherheitsbereich (14) des Gerätegehäuses angeordnet und mit einen zweiten Eingang des Batterieumschalters (18) verbunden ist, daß der Batterieumschalter (18) an ein Überwachungsmittel (21) im Sicherheitsbereich (10) des Gerätes angeschlossen ist, wobei das Überwachungsmittel (21) über die Spannungsinformation den Versorgungszustand auswertet, wobei zwischen dem ersten bzw. zweiten Eingang des Batterieumschalters (18) und dem Ausgang des Batterieumschalters (18) eine erste Reihenschaltung von Schottky-Dioden (183, 184) bzw. zweite Reihenschaltung von Schottky-Dioden (185, 186) angeordnet ist, deren Mittelabgriffe (187, 188) mit Eingängen des Überwachungsmittels (21) verbunden sind.

2. Anordnung, nach Anspruch 1, **dadurch gekennzeichnet, daß** das Überwachungsmittel (21) aus einem Analog/Digital-Umsetzer (123) und einem Modulprozessor (120) zur Auswertung der anliegenden Batteriespannungen besteht und daß ein Anzeige- oder Signalisierungsmittel mit dem Modulprozessor (120) operativ verbunden ist, um den erforderlichen Wechsel mindestens der zweiten Batterie (140) anzuzeigen oder zu signalisieren.

3. Anordnung, nach den Ansprüchen 1 und 2, **dadurch gekennzeichnet, dass** die Mittelabgriffe (187, 188) der ersten und zweiten Reihenschaltung von Schottky-Dioden mit Eingängen des Analog/Digital-Umsetzers (123) des Überwachungsmittels (21) verbunden sind.

4. Anordnung, nach Anspruch 1, **dadurch gekennzeichnet, daß** der Batterieumschalter (18) durch Dioden oder gesteuerte elektronische Schalter mindestens zwei Batterien oder Batteriesätze entkoppelt und ausgangsseitig zur Versorgung des Überwachungsmittels (21) und von weiteren Komponenten im Sicherheitsbereich ausgebildet ist.

5. Anordnung, nach Anspruch 4, **dadurch gekennzeichnet, daß** das Überwachungsmittel (21) und die weiteren Komponenten im Sicherheitsbereich (10) ein Sicherheitsmodul (100) bilden.

6. Anordnung, nach Anspruch 5, **dadurch gekennzeichnet, daß** der Batterieumschalter (18) und das Überwachungsmittel (21) Bestandteile des Sicherheitsmoduls (100) sind.

7. Anordnung, nach Anspruch 1, **dadurch gekennzeichnet, daß** ein Batteriefach für die zweite Batterie (140) im Nichtsicherheitsbereich (14) des Gerätegehäuses angeordnet und mit einem Batteriefachdeckel (16) verschließbar ist.

8. Anordnung, nach Anspruch 1, **dadurch gekennzeichnet, daß** der Batteriefachdeckel (16) in eine Seitenwand oder ein Bodenteil eines Gehäuses eingefügt ist.

9. Anordnung, nach Anspruch 1, **dadurch gekennzeichnet, daß** der Modulprozessor (120) programmiert ist, den Betrieb des Gerätes zu verändern, wenn das erforderliche Wechseln mindestens der zweiten Batterie (140) ausbleibt.

10. Anordnung, nach Anspruch 1, **dadurch gekennzeichnet, daß** der Modulprozessor (120) programmiert ist, das Gerät nach einer Karenzzeit zu blockieren, wenn das erforderliche Wechseln mindestens der zweiten Batterie (140) ausbleibt.

## Claims

1. An arrangement for power supply for a security area of a device having a first battery (134) on a first input of a battery changeover switch (18) in the security area (10),
**characterized in that** a second battery (140) is arranged in a non-security area (14) of the housing of the device and is connected with a second input of the battery changeover switch (18), that the battery changeover switch (18) is connected to a monitoring means (21) in the security area (10) of the device, wherein the monitoring means (21) analyses the supply status through the voltage information, wherein, between the first and the second input of the battery changeover switch (18) and the output of the battery changeover switch (18), there is arranged a first series connection of Schottky diodes (183, 184) and a second series connection of Schottky diodes (185, 186) the centre taps (187, 188) of which are connected to the inputs of the monitoring means (21).

2. An arrangement according to Claim 1, **characterized in that** the monitoring means (21) comprises an analogue/digital converter (123) and a module processor (120) for analysing the applied operating voltages and that a display means or signalling means is operatively connected with the module processor (120) in order to display or signal the required substitution of at least the second battery (140).

3. An arrangement according to Claims 1 and 2, **characterized in that** the centre taps (187, 188) of the first and the second series connection of Schottky diodes are connected with inputs of the analogue/digital converter (123) of the monitoring means (21).

4. An arrangement according to Claim 1, **characterized in that** the battery changeover switch (18) decouples at least two batteries or sets of batteries by means of diodes or controlled electronic switches and, on the output side, is designed for supplying the monitoring means (21) and further components in the security area.

5. An arrangement according to Claim 4, **characterized in that** the monitoring means (21) and further components in the security area (10) form a security module (100).

6. An arrangement according to Claim 5, **characterized in that** the battery changeover switch (18) and the monitoring means (21) are components of the security module (100).

7. An arrangement according to Claim 1, **characterized in that** a battery compartment for the second battery (140) is arranged in the non-security area (14) of the housing of the device and can be closed with a battery compartment cover (16).

8. An arrangement according to Claim 1, **characterized in that** the battery compartment cover (16) is integrated into a side wall or a bottom part of a housing.

9. An arrangement according to Claim 1, **characterized in that** the module processor (120) is programmed for changing the operation of the device when the required substitution of at least the second battery (140) is not effected.

10. An arrangement according to Claim 1, **characterized in that** the module processor (120) is programmed for blocking the device after a waiting period when the required substitution of at least the second battery (140) is not effected.

## Revendications

1. Disposition destinée à l'alimentation en courant pour une zone de sécurité d'un appareil avec une première batterie (134) sur une première entrée d'un commutateur piles-réseau (18) dans la zone de sécurité (10), **caractérisée en ce qu'**une seconde batterie (140) est disposée dans une zone non sécurisée (14) du boîtier d'appareil et connectée à une seconde entrée du commutateur piles-réseau (18), **en ce que** le commutateur piles-réseau (18) est raccordé à un élément de surveillance (21) dans la zone de sécurité (10) de l'appareil, ledit élément de surveillance (21) évaluant l'état d'alimentation via l'information de tension, un premier couplage en série de diodes à barrière de Schottky (183, 184) ou un second couplage en série de diodes à barrière de Schottky (185, 186) étant disposé entre la première ou la seconde entrée du commutateur piles-réseau (18) et la sortie du commutateur piles-réseau (18), auquel les prises médianes (187, 188) sont connectées aux entrées de l'élément de surveillance (21).

2. Disposition selon la revendication 1, **caractérisée en ce que** l'élément de surveillance (21) se compose d'un commutateur (123) analogue/numérique et d'un processeur modulaire (120) en vue d'évaluer les tensions de batterie appliquées et, **en ce qu**'un moyen d'affichage ou de signalisation est opérativement connecté au processeur modulaire (120), afin d'afficher ou de signaler le changement nécessaire d'au moins la seconde batterie (140).

3. Disposition selon les revendications 1 et 2, **caractérisé en ce que** les prises médianes (187, 188) des premier et second couplages en série de diodes à barrière de Schottky sont connectées aux entrées du commutateur (123) analogue/numérique de l'élément de surveillance (21).

4. Disposition selon la revendication 1, **caractérisée en ce que** le commutateur piles-réseau (18) découple au moins deux batteries ou des jeux de batteries par des diodes ou des interrupteurs commandés électroniques et, qu'il est conçu côté sortie pour l'alimentation de l'élément de surveillance (21) et d'autres composants dans la zone de sécurité.

5. Disposition selon la revendication 4, **caractérisée en ce que** l'élément de surveillance (21) et les autres composants forment un module de sécurité (100) dans la zone de sécurité (10).

6. Disposition selon la revendication 5, **caractérisée en ce que** le commutateur piles-réseau (18) et l'élément de surveillance (21) sont des composantes du module de sécurité (100).

7. Disposition selon la revendication 1, **caractérisée en ce qu'**un compartiment batterie pour la seconde batterie (140) est disposé dans la zone non sécurisée (14) du boîtier d'appareil et peut être fermé avec un couvercle de compartiment batterie (16).

8. Disposition selon la revendication 1, **caractérisée en ce que** le couvercle du compartiment batterie (16) est inséré dans un panneau latéral ou dans un fond d'un boîtier.

9. Disposition selon la revendication 1, **caractérisée en ce que** le processeur modulaire (120) est programmé en vue de modifier le fonctionnement de l'appareil lorsque le changement nécessaire de la seconde batterie (140) fait défaut.

10. Disposition selon la revendication 1, **caractérisée en ce que** le processeur modulaire (120) est programmé en vue de bloquer l'appareil après une période d'attente lorsque le changement nécessaire de la seconde batterie (140) fait défaut.
